# EUROPEAN PATENT SPECIFICATION

(11) **EP 1 734 316 B1**
(45) Date of publication and mention of the grant of the patent: **06.11.2013**
(21) Application number: 06012390.8
(22) Date of filing: 16.06.2006
(51) Int. Cl.: F24H 8/00, F24H 9/20

(54) **Condensing boiler assembly**
Brennwertkessel
Chaudière à condensation

(30) Priority: 18.06.2005 GB 0512517
(43) Date of publication of application: 20.12.2006
(73) Proprietor: Atmos Heating Systems, West March Daventry, Northants NN11 4SA (GB)
(72) Inventor: Thomason, John, Norlhants NN7 4LZ (GB)
(74) Representative: Wilson Gunn

(56) References cited:
- DE-A1- 4 441 443
- DE-A1- 10 118 337
- DE-A1- 19 757 069
- DE-A1-102005 003 868
- DE-U1- 29 911 411
- GB-A- 2 394 039

## Description

This invention relates to a condensing boiler assembly and to a method of removing the condensate from such a boiler assembly.

Condensing boiler assemblies are known which include a burner for burning a mixture of fuel and air to generate heat and a heat exchanger. A fan is used to pass the flue gases from the burner through the heat exchanger, on which water vapour in the flue gases condenses. This enables the heat exchanger to recover some of the latent heat and thereby to be more efficient. Once they have passed through the heat exchanger, the flue gases are vented to atmosphere through a flue.

A problem with condensing boiler assemblies is the need to remove the condensed water which would otherwise collect in the bottom of the assembly and block the heat exchanger. The normal practice is to permit the water to run from a boiler drain into a trap, and then from the trap into a discharge pipe, which takes it to a place where it can safely be disposed of. For example, the discharge pipe may run into the nearest waste or soil drain pipe, or into a soakaway drain external to the building in which the boiler is located.

The conventional methods of disposing of the condensate water have certain weaknesses. For example, when replacing an older non-condensing boiler with a new condensing boiler, there may be no suitable drainage point nearby to which the discharge pipe can be connected. This means that the boiler may have to be repositioned so that it is near a drainage point, or alternatively an external pump may be used to pump the water to a remote drainage point. Both these actions may involve considerable additional work and expense. In extreme cases where no suitable drainage point is available, it may not be possible to use a condensing boiler at all. A further disadvantage is that drainage pipe carrying the water must be protected from freezing in cold weather, and indeed the drainage point must similarly be protected. If the pipe is permitted to freeze this can result in the boiler breaking down, or worse, may cause the boiler to emit dangerous fumes into the property.

Document DE 101 18 337 discloses the preamble of claim 1.

It is an objective of the present invention to provide an improved condensing boiler assembly that overcomes or at least mitigates the problems of the prior art assemblies.

It is a further objective of the present invention to provide an improved method of removing the condensate from a condensing boiler assembly that overcomes the disadvantages of the known methods.

In accordance with a first aspect of the invention, there is provided a condensing boiler assembly comprising a burner, a heat exchanger, a means for passing flue gasses from the burner over the heat exchanger such that water vapour in the flue gasses is condensed, a flue though which the flue gasses are vented to atmosphere, and a tank for collecting the condensate, the boiler assembly further comprising an outlet nozzle and a pump for pumping the condensate from the tank to the outlet nozzle: characterised in that the nozzle located at or close to an outlet or terminal of the flue pipe and in that the pump is connected with the nozzle by means of pipe work which runs through at least part of the flue pipe.

The pump may be configured to pump the condensate to the outlet nozzle at a pressure of 2bar which corresponds to 0.2MPa or more.

In one embodiment, the outlet nozzle is located within the flue pipe. This is a particularly advantageous arrangement as the condensate water emitted from the nozzle can be carried away by the flue gasses or by air discharged through the flue pipe. This arrangement also reduces or eliminates the risks associated with freezing as the pump can be located in the boiler casing and any pipe work connecting the pump with the outlet nozzle can be routed through the boiler housing and or the flue pipe.

The pipe work may comprise a flexible tube.

The condensing boiler assembly may further comprise control means configured to activate the pump to discharge the condensate from the tank through the outlet nozzle. The control means may comprise a means for detecting the level of condensate in the tank and means for activating the pump when the condensate reaches a threshold level in the tank. The control means may comprise a float switch for activating the pump when the condensate reaches the threshold level in the tank. Alternatively, the control means may comprise a level sensing switch for activating the pump when the condensate reaches the threshold level in the tank. In a further alternative embodiment, the control means is configured so that the pump is actuated periodically, irrespective of the level of the condensate in the tank. The control means may be configured so that the pump is only actuated whilst the boiler is running. Alternatively, the control means may be configured so that the pump is actuated when the burner is not operating but a fan for passing the flue gasses through the heat exchanger and through the flue is running. The control means may comprise means for inhibiting operation of the boiler in the event that a fault in the condensate pumping system is detected. Thus the control means may comprise means for detecting when the level of the condensate in the tank reaches a second threshold level. The control means may also comprise means for indicating when a fault has occurred.

The condensing boiler assembly may further comprise a main casing for accommodating the heat exchanger and the burner. The tank may be located within the main casing or it may be located externally of the main casing.

The air intake pipe and the flue pipe may extend laterally or vertically.

In accordance with a second aspect of the invention, there is provided a method of removing condensate from a condensing boiler assembly in accordance with the first aspect, the method comprising operating the pump to pump the condensate from the tank to the outlet nozzle. The pump may be operated to pump the condensate from the tank to the outlet nozzle when the boiler is running or when the fan is running but the burner is not firing.

Several embodiments of the invention will now be described, by way of example only, with reference to the accompanying drawings, in which:
Figure 1 is a plan view of a boiler assembly in accordance with the invention mounted to a wall of a building;
Figure 2 is a cross sectional view of the boiler assembly of Figure 1 taken on line X-X;
Figure 3 is a view taken in the direction of arrow A in Figure 2 of the end of a flue forming part of the boiler assembly of Figures 1 and 2; and
Figure 4 is a cross sectional view of part of the boiler assembly of Figure 2 showing a modified condensate collection tank arrangement.

A boiler assembly 10 having a main casing 12 is mounted to the inside surface a wall 14 of a building. An air intake pipe 16 and a flue pipe 18 extend laterally through a further wall 19 of the building to the outside air. Whilst in the present embodiment the air intake pipe 16 and the flue pipe 18 are shown extending to the right (as shown), this is not essential and the air intake pipe 16 and flue pipe 18 could extend laterally to the left, rearwardly or even vertically upwards depending on the requirements of the installation. A concentric flue pipe and air inlet may also be used.

The boiler assembly further comprises a heat exchanger 20 and a burner 22. The burner includes a fan 24 which blows a mixture of fuel and air into the boiler, where it burns and produces hot flue gases. The hot flue gases travel down through the heat exchanger 20, as indicated by the arrows 26, through an outlet 28 and back up a flue channel 30 located behind the heat exchanger 20, and out through the flue pipe 18. In an alternative arrangement, the fan 24 could be positioned downstream of the heat exchanger 20 so as to draw the flue gasses over the heat exchanger rather than blowing them. In the present embodiment, the boiler assembly 10 is adapted to bum a mixture of gas and air. However, the invention can be applied equally to boilers that are adapted to burn oil or any other suitable fuel.

As is well known in the art, the heat exchanger includes one or more fluid circuits (not shown) through which fluids can be circulated so that heat from the hot flue gases can be transferred to the fluids. Thus the boiler assembly 10 can be used to provide hot water and/or central heating. The fluid circuits may comprise a matrix of copper pipes embedded in a cast aluminium block having fins to promote efficient heat exchange. As the flue gasses pass down through the heat exchanger, water vapour present in the gasses condenses and the condensate water runs down the heat exchanger 20 into a collector tank 32, which holds a small volume of water.

In order to remove the condensate in accordance with the invention, the boiler assembly includes an electric pump 34. An inlet side of the pump is connected by means of pipe work 36 to an inlet 38 within the tank 32. A filter 40 may be provided at the inlet 38, or anywhere in the flow path between the inlet and the pump, to prevent dirt or solid matter entering the pump 34 and causing damage to the pump 34. An outlet pipe 42 extends from an outlet side of the pump up the inside of the boiler casing and enters the flue pipe 18 near an elbow 44. Having entered the flue pipe 18, the outlet pipe 42 runs along the length of the flue pipe 18 and terminates at or near to the end of the flue pipe 18 with a spray nozzle 46 at the flue pipe terminal 48.

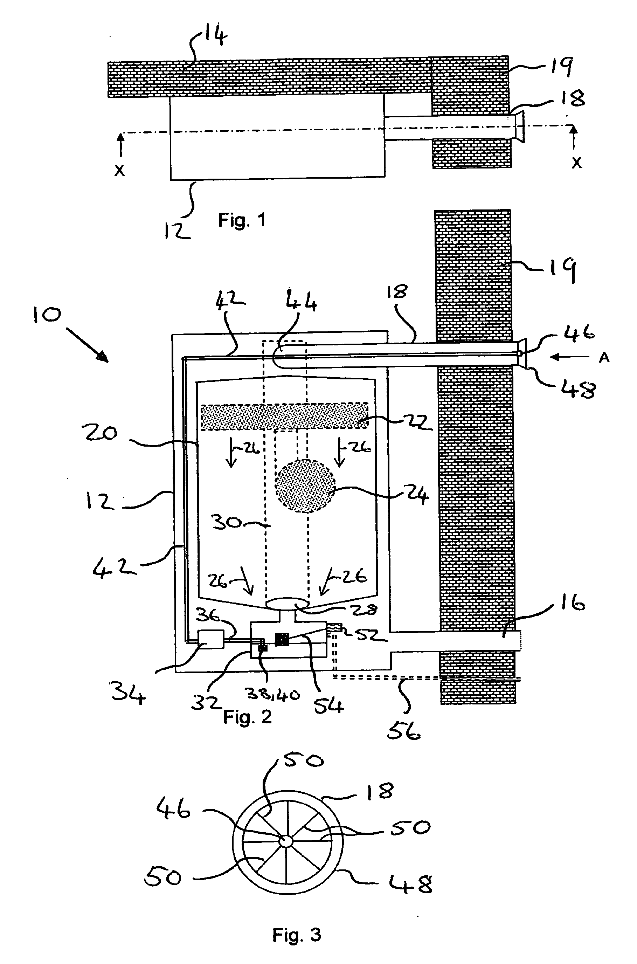

The pump 34 need not be located below the heat exchanger adjacent the tank 32 as shown in Figure 2 but can be positioned anywhere in the fluid path between the inlet 38 and the outlet nozzle 46. The pump 34 might be positioned above the heat exchanger 20 close to the elbow 44 of the flue pipe, for example. The pump must be capable of generating sufficient pressure to ensure that the condensate is atomised or formed into a fine mist or spray as it passes through the nozzle. Typically a pump producing pressures of 2 bar (0.2MPa) or more will be used. In a typical boiler assembly, the pump will produce pressures in the range of 2 to 10 bar (0.2-1MPa). Advantageously the pump is a displacement pump.

As shown in Figure 3, the spray nozzle 46 is held central to the flue pipe 42 with support bars 50. The support bars 50 enable the nozzle 46 to be correctly positioned, but also act as a protection grille to prevent the entry of birds or any other object into the flue pipe, causing a potential blockage.

An electrical float switch 52 is located in the condensate collector tank 32, which measures the level of the water by means of a float and arm 54. The switch 52 is configured to switch the pump 34 on when the level of condensate in the tank 32 reaches a pre-determined threshold.

The method of removal of the condensate water from the boiler assembly 10 will now be described.

When the boiler is operating, the condensate collector tank 32 will fill with condensate water over a period of time. Once the condensate in the tank 32 reaches the threshold level, the float switch 52 is turned on. This sends a signal to the boiler control means (not shown), which then switches on the pump. The pump 34 draws water from the tank 32 through the inlet 38 and sends it via the outlet pipe 42 to the spray nozzle 46, which causes the condensate water to spray out in a fine mist or droplets, so that it is carried away with the stream of flue gas, and thus out of the flue pipe terminal to atmosphere. When the level of the water in the tank 32 has fallen below the threshold value the float switch is turned off and the pump 34 is stopped. Whilst the boiler is in operation, this process repeats itself, so that the condensate water collected in the tank 32 is pumped away and is not permitted to build up. The float switch 52 or the control means may incorporate a delay so that the pump 34 is operated for a minimum period following activation in order to avoid repeated operation of the pump or cycling.

In colder weather the flue gases emitted from the terminal 48 of a condensing boiler flue create a steam cloud around the terminal, which is generally known as pluming. The spray mist that is emitted from the nozzle 46 of the condensate pump system will mingle with the flue gas in such a manner that it will only cause a small amount of extra pluming, and that only for a very brief time. Typically the pump 34 will be operated for a few minutes in every hour, and so the mist emitted from the nozzle 46 will not cause anything noticeably unusual in the operation of the boiler.

The nozzle 46 can be of any suitable type and a further filter may be provided in the outlet pipe 42 to prevent the nozzle becoming blocked or damaged.

With a boiler assembly 10 constructed and operated in accordance with the invention, there is no requirement for a connection with a drain, so that the problems of requiring a drain and the associated drain pipe are eliminated. In addition, the potential problems caused by freezing are eliminated since the pump 34 and the majority outlet pipe 42 are contained within the casing 12 of the boiler, which will be warm. The outlet pipe 42 and nozzle 46 are also protected from freezing where they are contained within the flue pipe 18 because this is always hot when the boiler is running. It is possible for the nozzle 46 to freeze when the boiler is not running, as it is near the end of the flue pipe 18 and therefore subject to external air temperatures. However the removal of condensate water does not need to occur unless the boiler is running, and when the boiler running, by the time the condensate water has built up in the collector tank 32, the hot flue gases will have warmed the spray nozzle 46 and melted any ice.

A further benefit of a boiler assembly 10 in accordance with the invention is that the boiler casing 12 can be (room) sealed with respect to the building in which it is installed. This makes the boiler assembly 10 much safer than a conventional condensing boiler having a drain as it reduces the risk of dangerous fumes being emitted into the building via the condensate drain pipe.

In the event that the condensate pumping system should fail, means must be provided either to inhibit the boiler from operating or for removal of excess condensate from the tank 32 to ensure that the boiler does not become blocked with the risk that it might then give off dangerous fumes. This can be dealt with in a number of possible ways:
a) As illustrated in dashed lines in Figure 3, an overflow pipe 56 can be arranged to extend from the condensate collector tank 32 through the outside wall 19 to allow the excess condensate to dribble out. This dripping water will act as a warning in a manner similar to an overflow pipe from a storage tank or a toilet cistern, and will alert the owner or the service engineer of the problem. This arrangement will prevent the flue system from becoming blocked and therefore will not cause the boiler to stop working. In certain boiler designs, the flue pipe 18 may be located lower down at the level of the heat exchanger outlet 28. In which case, no additional overflow pipe will be required as the condensate water will over flow along the flue pipe 18 and dribble out of the terminal 48.
b) A second sensor or switch can be fitted to detect if the condensate water has reached or is close to the outlet 28 of the heat exchanger, at which point the sensor or switch will send a signal to the boiler control means which will switch off the boiler, and indicate a fault. A light or audible device may be provided to enable the control means to indicate that a fault has occurred.
c) Sensor means may be provided to detect when the pump is non-operational. This might included the use of a flow sensor means in the outlet pipe 42 for example. If the pump fails to operate, the sensor means sends a signal to the boiler control means which will switch off the boiler and indicate a fault.
d) In certain designs of boiler assembly a blockage of the heat exchanger outlet 28 will automatically stop the boiler and cause the control means to indicate a fault condition. For such boiler assemblies there is no requirement to provide a specific system for dealing with a failure in the condensate pumping system, as the condensate water can simply be allowed to build up in the tank 32 until it blocks the heat exchanger outlet and stops the boiler.

In the present embodiment, the pump 34 is controlled via the boiler control system to ensure that it only pumps when the boiler is running, preferably at full output, so that there is a maximum of flue gas to carry away the spray. However, the system could be configured so that the pump is 34 activated when the burner 22 is not operating, but when the fan 24 alone is running at full speed. The benefit of this arrangement is that the air which will be circulating through the heat exchanger and flue will be dry, and therefore will carry away the condensate spray more effectively.

It will be appreciated that the float switch 52 can be replaced by any suitable means for triggering operation of the pump when the level of water in the condensate tank 32 reaches the required threshold. For example, the float switch could be replaced by a level sensing switch or some other form of sensor. In a further alternative arrangement, the float switch 46 may be omitted altogether and the boiler control means can be configured to operate the pump 34 periodically whilst the boiler, or at least the fan, is running. For example, the control means may switch the pump on for a period of up to one minute in every 30 minutes of boiler firing time. In practice it is expected that the pump 34 will operate to pump about 2 litres of condensate water per day.

The condensate tank 32 is preferably contained within the main boiler casing 12 as shown in Figure 2. However, the tank 32 could be mounted externally of the main casing.

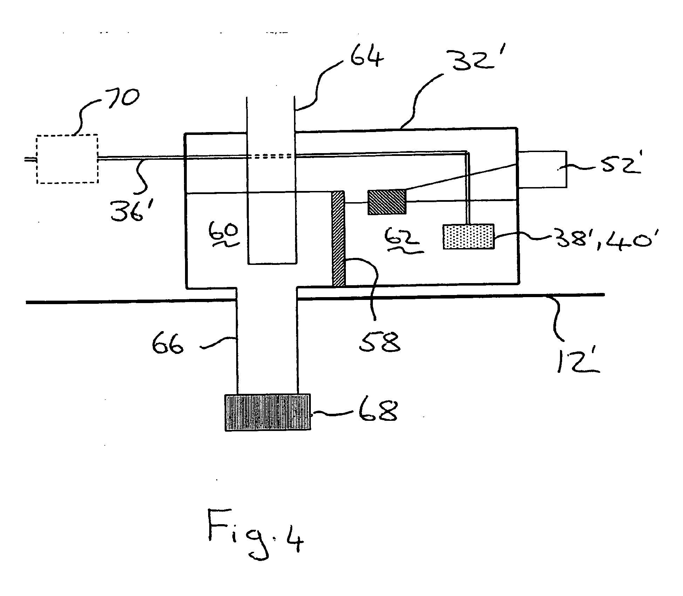

Figure 4 shows an alternative embodiment of a condensate tank 32' which includes means for removing impurities from the condensate. The tank 32' includes a partition wall 58 which divides the tank 32' into first and second chambers 60, 62. The condensate water is directed from the heat exchanger into the first chamber 60 though an inlet 64. The condensate water accumulates in the first chamber 60 until the level is sufficient that it flows over the partition wall 58 into the second chamber 62 in which the inlet 38' to the pump and the float switch 52' are provided. Impurities in the condensate are able to settle to the bottom of the first chamber 60 thus reducing the risk of them being drawn into the pump. The floor of the first chamber 60 has an outlet 66 with a removable cap 68 to enable the sediment to be removed periodically. Despite the provision of a settlement chamber, a filter means 40' will usually be provided to further protect the pump. As shown in Figure 4, the filter 40' may be located at the inlet or, as indicated by dashed lines 70, at a location in the pipe work 36' between the inlet and the pump.

Where the terms "comprise", "comprises", "comprised" or "comprising" are used in this specification, they are to be interpreted as specifying the presence of the stated features, integers, steps or components referred to, but not to preclude the presence or addition of one or more other feature, integer, step, component or group thereof.

## Claims

1. A condensing boiler assembly (10) comprising a burner (22), a heat exchanger (20), a means (24) for passing flue gasses from the burner (22) through the heat exchanger (20) such that water vapour in the flue gasses is condensed, a flue pipe (18) through which the flue gasses are vented to the atmosphere, and a tank (32) for collecting the condensate, the boiler assembly (10) further comprising an outlet nozzle (46) and a pump (34) for pumping the condensate from the tank (32) to the outlet nozzle (46); **characterised in that** the nozzle (46) is located at or close to an outlet or terminal (48) of the flue pipe (18) and **in that** the pump (34) is connected with the nozzle by means of pipe work (42) which runs through at least part of the flue pipe (18).

2. A condensing boiler assembly as claimed in claim 1, in which the pump (34) is configured to pump the condensate to the outlet nozzle (46) at a pressure of 2 bar, which corresponds to 0.2MPa, or more.

3. A condensing boiler assembly as claimed in claim 1 or claim 2, in which the outlet nozzle (46) is located within the flue pipe (18) at or close to the outlet or terminal (48) thereof.

4. A condensing boiler assembly as claimed in any one of the previous claims, in which the boiler assembly (10) comprises a control means including a float switch (52) for detecting the level of condensate in the tank (32) and means for activating the pump (34) when the condensate in the tank (32) reaches a threshold level.

5. A condensing boiler assembly as claimed in any one of claims 1 to 3, in which the boiler assembly (10) comprises a control means including a level sensing switch for detecting the level of condensate in the tank and means for activating the pump (34) when the condensate in the tank (32) reaches a threshold level.

6. A condensing boiler assembly as claimed in any one of claims 1 to 3, in which the boiler assembly comprises control means configured to activate the pump (34) periodically.

7. A condensing boiler assembly as claimed in any one of claims 4 to 6, in which the control means is configured so that the pump (34) is only activated whilst the boiler assembly (10) is running.

8. A condensing boiler assembly as claimed in any one of claims 4 to 7, in which the means for passing flue gasses through the heat exchanger (20) comprises a fan (24) and the control means is configured to activate the pump (34) when the fan (24) is running but the burner (22) is not firing.

9. A condensing boiler assembly as claimed in any one of claims 4 to 8, in which the control means comprise means for detecting a fault in the condensate pumping system and means for inhibiting operation of the boiler in the event that a fault in the condensate pumping system is detected.

10. A condensing boiler assembly as claimed in claim 9, in which the control means comprises means for detecting when the level of the condensate in the tank (32) reaches a second threshold level.

11. A condensing boiler assembly as claimed in any one of the previous claims, in which an air intake pipe (16) and the flue pipe (18) extend laterally.

12. A condensing boiler assembly as claimed in any one of claims 1 to 10, in which an air intake pipe (16) and the flue pipe (18) extend vertically.

13. A method of removing condensate from a condensing boiler assembly in accordance with any one of claims 1 to 12 the method comprising operating the pump (34) to pump the condensate from the tank (32) to the outlet nozzle (46).

14. A method as claimed in claim 13, in which the pump (34) is operated to pump condensate from the tank (32) to the outlet nozzle (46) only when the boiler is running or when the fan (24) is running but the burner (22) is not firing.

## Patentansprüche

1. Ein Brennwertkessel (10) mit einem Brenner (22), einem Wärmetauscher (20), einem Mittel (24) zum Leiten von Abgasen von dem Brenner (22) durch den Wärmetauscher (20), so dass Wasserdampf in den Abgasen kondensiert wird, einem Abgasrohr (18), durch welches die Abgase in die Atmosphäre abgelassen werden, und einem Tank (32) zum Sammeln des Kondensats, wobei der Kessel (10) außerdem eine Auslassdüse (46) und eine Pumpe (34) zum Pumpen des Kondensats von dem Tank (32) zu der Auslassdüse (46) aufweist, **dadurch gekennzeichnet, dass** die Düse (46) bei oder nahe an einem Auslass oder Anschluss (48) des Abgasrohres (18) angeordnet ist und dass die Pumpe (34) mit der Düse über eine Rohrleitung (42) verbunden ist, die durch wenigstens einen Teil des Abgasrohres (18) verläuft.

2. Ein Brennwertkessel nach Anspruch 1, bei dem die Pumpe (34) so konfiguriert ist, dass sie das Kondensat mit einem Druck von 2 bar, was 0,2 MPa entspricht, oder mehr zu der Auslassdüse (46) pumpt.

3. Ein Brennwertkessel nach Anspruch 1 oder Anspruch 2, bei dem die Auslassdüse (46) innerhalb des Abgasrohres (18) bei oder nahe dessen Auslass oder Anschluss (48) angeordnet ist.

4. Ein Brennwertkessel nach einem der vorhergehenden Ansprüche, bei dem der Kessel (10) eine Steuereinrichtung umfasst mit einem Schwimmerschalter (52) zur Erfassung des Kondensateniveaus in dem Tank (32) und Mittel zum Aktivieren der Pumpe (34), wenn das Kondensat in dem Tank (32) einen Schwellenwert erreicht.

5. Ein Brennwertkessel nach einem der Ansprüche 1 bis 3, bei dem der Kessel (10) eine Steuereinrichtung umfasst mit einem Niveausensorschalter zur Erfassung des Kondensatniveaus in dem Tank und Mittel zum Aktivieren der Pumpe (34), wenn das Kondensat in dem Tank (32) einen Schwellenwert erreicht.

6. Ein Brennwertkessel nach einem der Ansprüche 1 bis 3, bei dem der Kessel Steuermittel aufweist, die dazu ausgestaltet sind, die Pumpe (34) periodisch zu aktivieren.

7. Ein Brennwertkessel nach einem der Ansprüche 4 bis 6, bei dem die Steuermittel so konfiguriert sind, dass die Pumpe (34) nur aktiviert wird, wenn der Kessel (10) läuft.

8. Ein Brennwertkessel nach einem der Ansprüche 4 bis 7, bei dem die Mittel zum Leiten von Abgasen durch den Wärmetauscher (20) ein Gebläse (34) umfassen und die Steuermittel so konfiguriert sind, dass sie die Pumpe (34) aktivieren, wenn das Gebläse (24) läuft, der Brenner (22) aber nicht feuert.

9. Ein Brennwertkessel nach einem der Ansprüche 4 bis 8, bei dem die Steuermittel Mittel zum Erfassen eines Fehlers in dem Kondensatpumpensystem und Mittel zum Verhindern des Betriebs des Kessels in dem Fall, dass in dem Kondensatpumpsystem ein Fehler erfasst wird, aufweisen.

10. Ein Brennwertkessel nach Anspruch 9, bei dem die Steuermittel Mittel zum Erfassen, wann das Kondensatniveau in dem Tank (32) einen zweiten Schwellenwert erreicht, aufweisen.

11. Ein Brennwertkessel nach einem der vorhergehenden Ansprüche, bei dem sich ein Luftzufuhrrohr (16) und das Abgasrohr (18) seitlich erstrecken.

12. Ein Brennwertkessel nach einem der Ansprüche 1 bis 10, bei dem sich ein Luftzufuhrrohr (16) und das Abgasrohr (18) vertikal erstrecken.

13. Ein Verfahren zum Entfernen von Kondensat aus einem Brennwertkessel nach einem der Ansprüche 1 bis 12, wobei das Verfahren die Betätigung der Pumpe (34) zum Pumpen des Kondensats von dem Tank (32) zu der Auslassdüse (46) umfasst.

14. Ein Verfahren nach Anspruch 13, bei dem die Pumpe (34) betätigt wird, um Kondensat von dem Tank (32) nur dann zu der Auslassdüse (46) zu pumpen, wenn der Kessel läuft oder wenn das Gebläse (24) läuft, der Brenner (22) aber nicht feuert.

## Revendications

1. Ensemble chaudière à condensation (10) comprenant un brûleur (22), un échangeur thermique (20), un moyen (24) pour faire passer des gaz de fumée depuis le brûleur (22) à travers l'échangeur thermique (20) de sorte que la vapeur d'eau dans les gaz de fumée soit condensée, un conduit de fumée (18) à travers lequel les gaz de fumée sont évacués vers l'atmosphère, et un réservoir (32) pour recueillir le liquide de condensation, l'ensemble chaudière (10) comprenant en outre une buse de sortie (46) et une pompe (34) pour pomper le liquide de condensation depuis le réservoir (32) vers la buse de sortie (46) ; **caractérisé en ce que** la buse (46) est située au niveau ou à proximité d'une sortie ou d'une borne (48) du conduit de fumée (18) et **en ce que** la pompe (34) est reliée à la buse par l'intermédiaire d'une tuyauterie (42) qui s'étend à travers au moins une partie du conduit de fumée (18).

2. Ensemble chaudière à condensation tel que revendiqué dans la revendication 1, dans lequel la pompe (34) est configurée pour pomper le liquide de condensation vers la buse de sortie (46) à une pression de 2bars, ce qui correspond à 0,2MPa, ou plus.

3. Ensemble chaudière à condensation tel que revendiqué dans la revendication 1 ou 2, dans lequel la buse de sortie (46) est située à l'intérieur du conduit de fumée (18) au niveau ou à proximité de la sortie ou de la borne (48) de celui-ci.

4. Ensemble chaudière à condensation tel que revendiqué dans l'une quelconque des revendications précédentes, dans lequel l'ensemble chaudière (10) comprend un moyen de commande comportant un interrupteur à flotteur (52) pour détecter le niveau du liquide de condensation dans le réservoir (32) et un moyen pour activer la pompe (34) lorsque le liquide de condensation dans le réservoir (32) atteint un niveau seuil.

5. Ensemble chaudière à condensation tel que revendiqué dans l'une quelconque des revendications 1 à 3, dans lequel l'ensemble chaudière (10) comprend un moyen de commande comportant un commutateur de détection de niveau pour détecter le niveau du liquide de condensation dans le réservoir et un moyen pour activer la pompe (34) lorsque le liquide de condensation dans le réservoir (32) atteint un niveau seuil.

6. Ensemble chaudière à condensation tel que revendiqué dans l'une quelconque des revendications 1 à 3, dans lequel l'ensemble chaudière comprend un moyen de commande configuré pour activer la pompe (34) de manière périodique.

7. Ensemble chaudière à condensation tel que revendiqué dans l'une quelconque des revendications 4 à 6, dans lequel le moyen de commande est configuré de sorte que la pompe (34) ne soit activée que pendant que l'ensemble chaudière (10) est en marche.

8. Ensemble chaudière à condensation tel que revendiqué dans l'une quelconque des revendications 4 à 7, dans lequel le moyen pour faire passer les gaz de fumée à travers l'échangeur thermique (20) comprend un ventilateur (24) et le moyen de commande est configuré pour activer la pompe (34) lorsque le ventilateur (24) est en marche mais que le brûleur (22) n'est pas allumé.

9. Ensemble chaudière à condensation tel que revendiqué dans l'une quelconque des revendications 4 à 8, dans lequel le moyen de commande comprend un moyen pour détecter un défaut dans le système de pompage du liquide de condensation et un moyen pour inhiber le fonctionnement de la chaudière dans le cas où un défaut dans le système de pompage du liquide de condensation est détecté.

10. Ensemble chaudière à condensation tel que revendiqué dans la revendication 9, dans lequel le moyen de commande comprend un moyen pour détecter le moment où le niveau du liquide de condensation dans le réservoir (32) atteint un deuxième niveau seuil.

11. Ensemble chaudière à condensation tel que revendiqué dans l'une quelconque des revendications précédentes, dans lequel un conduit d'admission d'air (16) et le conduit de fumée (18) s'étendent latéralement.

12. Ensemble chaudière à condensation tel que revendiqué dans l'une quelconque des revendications 1 à 10, dans lequel un conduit d'admission d'air (16) et le conduit de fumée (18) s'étendent verticalement.

13. Procédé destiné à éliminer le liquide de condensation d'un ensemble chaudière à condensation conformément à l'une quelconque des revendications 1 à 12, le procédé comprenant l'actionnement de la pompe (34) pour pomper le liquide de condensation depuis le réservoir (32) vers la buse de sortie (46).

14. Procédé tel que revendiqué dans la revendication 13, dans lequel la pompe (34) est actionnée pour ne pomper le liquide de condensation depuis le réservoir (32) vers la buse de sortie (46) que lorsque la chaudière est en marche ou que lorsque le ventilateur (24) est en marche mais que le brûleur (22) n'est pas allumé.
